# EUROPEAN PATENT SPECIFICATION

(11) **EP 1 005 740 B1**
(45) Date of publication and mention of the grant of the patent: **22.02.2006**
(21) Application number: 98929240.4
(22) Date of filing: 26.06.1998
(51) Int. Cl.: H04L 12/437, H04J 3/08

(54) **A METHOD OF TRANSMITTING DATA IN A RING-SHAPED TELETRANSMISSION NETWORK, SUCH AS A NETWORK AND A NETWORK ELEMENT THEREFOR**
VERFAHREN ZUR ÜBERTRAGUNG VON DATEN IN EINEM RINGFÖRMIGEN FERNÜBERTRAGUNGSNETZ SOWIE NETZWERK UND NETZWERKELEMENT DAFÜR
PROCEDE DE TRANSMISSION DE DONNEES DANS UN RESEAU DE TELETRANSMISSION A CONFIGURATION ANNULAIRE, RESEAU CORRESPONDANT ET ELEMENT DE RESEAU A CET EFFET

(30) Priority: 27.06.1997 DK 76897
(43) Date of publication of application: 07.06.2000
(73) Proprietor: TELLABS DENMARK A/S, 2750 Ballerup (DK)
(72) Inventor: ELLEGAARD, Lars, DK-2730 Herlev (DK); SCHIELLERUP, Gert, DK-3460 Birker d (DK)
(74) Representative: Boesen, Johnny Peder
(86) International application number: PCT/DK1998/000282
(87) International publication number: WO 1999/000943

(56) References cited:
- EP-A2- 0 506 396
- US-A- 5 159 595
- US-A- 5 179 548

## Description

The invention relates to a method of transmitting data in a ring-shaped teletransmission network, wherein a plurality of parallel primary channels and secondary channels, respectively, may be transferred on the transmission lines connecting the network elements so that a secondary channel is provided for each primary channel, wherein connections may be set up in the network such that a connection in each of the associated transmission lines uses one of the primary channels thereof, but not necessarily the same channel in each transmission line, and wherein, in case of drop-out of one or more transmission lines or one or more network elements, an auxiliary or replacement connection connecting the two network elements closest to the dropped-out part of the network may be established via the secondary channels in the remaining transmission lines. The invention moreover relates to a corresponding network element and to a ring-shaped teletransmission network.

Today, ring-shaped teletransmission networks of the type described are used extensively in e.g. SDH networks (Synchronous Digital Hierarchy). The protection mechanism in such a ring-shaped network may e.g. be of the type 2-fibre MS SPRing (Multiplex Section Shared Protection Ring), where the active traffic is transported via the bi-directional working paths. In case of errors, interrupted traffic is transported via the bi-directional protection paths in the opposite direction round in the ring. The great advantage of using MS SPRing is that with specific traffic patterns the capacity of the ringis greater than if other known protection mechanisms were used, such as e.g. MS DPRing (Multiplex Section Dedicated Protection Ring) or SNCP (Sub Network Connection Protection).

In case of an error, the working traffic which is transmitted in the direction toward the error is connected in a node (network element) close to the error into the protection path in the opposite direction away from the error. This is also called "head end bridge". The traffic is re-created in the node on the other side of the error by coupling the protection traffic which is transmitted in the direction toward the error into the working path in the opposite direction away from the error. This is also called "tail end switch" .

This principle works satisfactorily for normal connections in the network; but it has been found that problems may occur when so-called time slot interchange is used at the same time in the network, which means that an established connection does not necessarily use the same channel or time slot during its entire course in the ring, as a change may take place en route from one channel to another in a network element and back again in another network element, e.g. because the first channel is used by another connection on part of the stretch.

The problem is that if an error occurs in this situation causing drop-out of one of the network elements in which such a time slot interchange occurs, the MS SPRing mechanism will connect the interrupted working path to two different auxiliary channels by head end bridge and tail end switch, respectively, and since these auxiliary channels are not interconnected, the connection cannot be re-established and thus the traffic cannot be maintained.

EP 506 -396 describes a method of transmitting data in a ring-shaped teletransmission network. Network elements are connected to adjacent elements via transmission lines so that working and corresponding protection paths are established. In case of drop-out of a part of the network the elements adjacent to the drop-out re-direct the traffic such that the traffic incoming on the working paths of the elements side opposite to the side where the effect exists is switched to the corresponding protection paths. In each network element or node, there are link maps to store output lines and output time slots or output paths corresponding to input time slots or paths of the element. However, as this information is only stored ir the element itself it is lost when the element drops out, and thus it can not, in the case of time slot interchange, be used to re-direct the connections correctly.

A similar system is known from US 5 546 403. This system has two fibres for transmission in opposite directions. In each fibre some time slots are used as working lines and others for protection. The time slot numbers in one of the fibres may be changed. In stead of using e.g. time slots 1-24 as working lines and 25-48 as protection in both directions, it is the other way round in one of the directions. It does not deal with the described time slot interchange problem.

Accordingly, an object of the invention is to provide a method of the type stated in the opening paragraph wherein the traffic can be maintained even if a network element in which channel change takes place, drops out because of an error in the network.

This is achieved according to the invention in that it is registered for at least some of the network elements how primary channels on one side of an element are connected to primary channels on the other side of the element, in a first one of said two closest network elements the secondary channel associated with each auxiliary connection is connected to the corresponding primary channel, and in the second one of the two network elements the secondary channel is connected to a primary channel which is determined on the basis of the registration of the network element or elements which are present in the dropped-out part of the network, so that each primary channel in the first one of said two closest network elements is connected via the auxiliary connection to the same primary channel in the second one of the two network elements as before the rupture.

When in this manner allowing for how the primary channels were connected before the rupture in the part of the network now interrupted, it is ensured that the connection can be re-established by means of the secondary channels even though a plurality of channel changes in the primary channels took place in the interrupted section. When it is known how the connections were set-up before the rupture in the interrupted area, it is simple to set-up the auxiliary connections in the same manner.

When moreover, as stated in claim 2, the same secondary channel is used in each of the remaining transmission lines for each auxiliary connection, a simpler set-up of the necessary auxiliary connections is achieved, since these may be coupled straight through in the remaining network elements without any channel change being required.

This registration may be performed in a control and monitoring system associated with the netwrork, or, as stated in claim 3, it may be performed in the individual network elements. Then, as stated in claim 4, a registration may take place for each of the other network elements, thereby providing a solution which can also compensate for e.g. error types where the network is divided into segments, or, as stated in claim 5, a registration may take place, in each network element, for only some of the other network elements. In a particularly expedient embodiment, which is defined in claim 6, registration is performed in each network element for only one of the adjacent network elements of the element. This results in a simple structure of the individual network elements; but, on the other hand it is not possible in all cases to compensate for errors which divide the network into sections.

As mentioned, the invention also relates to a corresponding network element for use in such a ring-shaped teletransmission network. The network element is described in claim 7, and expedient embodiments of the network element corresponding to the those described above are defined in claims 8-10.

The invention additionally relates to a ring-shaped tele-transmission network of the said type. The network is described in claim 11, and expedient embodiments of the network corresponding to those described above are defined in claims 12-16.

Physically, the network may be constructed in many different ways; but the invention will be of particular importance when, like in claim 17, an optical network is involved, as these frequently transmit huge traffic amounts, and, therefore, drop-out will cause huge data amounts to be lost if the traffic cannot be maintained. In an expedient embodiment, which is defined in claim 18, each transmission line is formed by an optical fibre for each transmission direction; but a single fibre may also be involved in which transmission takes place at two different wavelengths in different directions.

The parallel channels cf the network may be produced in different ways. As stated in claim 19, e.g., they may be parallel channels in a time-division multiplex system, or, as stated in claim 20, each channel may be transmitted at an independent wavelength in a wavelength-division multiplex system. Further, as stated in claim 21, the parallel channels may also be transmitted in a plurality of parallel cables.

The invention may likewise find use in connection with various transmission protocols; such use may e.g. comprise transmission of data according to a Synchronous Digital Hierarchy (SDH), as stated in claim 22, and the design may then expediently be in the form of an MS SPRing, as stated in claim 23. Alternatively, a SONET system may be involved.

If, as stated in claim 24, the secondary channels can be used for the transmission of low priority data traffic in normal operation, and this traffic can be interrupted to accommodate said auxiliary connections in case of drop-out of one or more transmission lines or one or more network elements, an increased transmission capacity is achieved under normal conditions of operation. This may e.g. be utilized by data which are not sensitive to delays in the transmission, and which can therefore be interrupted when the channels are needed for the described use. Alternatively, as stated in claim 25, the secondary channels may be reserved for the said auxiliary connections, thereby always ensuring that they are available when needed. Furthermore, this solution requires less administration on the part of the control system.

The invention will now be described more fully below with reference to the drawing, in which
fig. 1 shows a known network in which the invention may be used,
fig. 2 shows the network of fig. 1 in a first error situation,
fig. 3 shows the network of fig. 1 in a second error situation,
fig. 4 shows a corresponding network having six nodes,
fig. 5 shows an established connection in the network of fig. 4 in nornal operation,
fig. 6 shows an error situation in the same network,
fig. 7 shows an example of time slot interchange,
fig. 8 shows another example of time slot interchange,
fig. 9 shows a connection using time slot interchange,
fig. 10 shows what happens to the connection of fig. 9 in an error situation,
fig. 11 shows how the nodes of the network may be provided with information on the set-up of the other nodes according to a first embodiment of the invention,
fig. 12 shows what happens to the connection of fig. 11 in an error situation,
figs. 13 and 14 correspond to figs. 11 and 12, merely with a differently set-up connection,
fig. 15 corresponds to fig. 13,
fig. 16 shows what happens to the connection of fig. 15 in an error situation in which the network is segmented,
fig. 17 shows how the nodes of the network may be provided with information on the set-up of the other nodes according to a second embodiment of the invention, and
fig. 18 shows what happens to the connection of fig. 17 in an error situation.

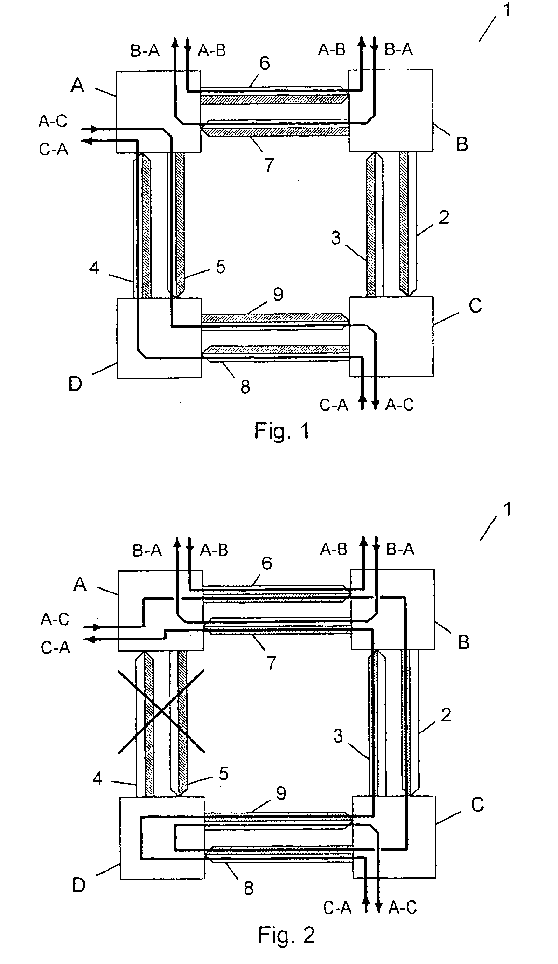

Fig. 1 shows an example of a known network 1 in which the invention may be used. It is an MS SPRing (Multiplex Section Shared Protection Ring) having two optical fibres, which is a network type that is typically used in an SDH network of the type which connects a telephone exchange to its subscribers. The ring is shown here with four network elements or nodes A, B, C and D. For example, the two network elements B and C are connected by the two fibres 2 and 3, of which the fibre 2 transmits in a direction from B to C, while the fibre 3 conversely transmits in the direction from C to B. Correspondingly, the network elements A and D are connected by the fibres 4 and 5, A and B by the fibres 6 and 7, and C and D by the fibres 8 and 9. Each fibre transfers working traffic as well as protection traffic. The capacity of each fibre is here divided equally between working capacity and protection capacity; but situations are also conceivable where a greater part of the capacity is used for working capacity if protection is desired for only part of the working capacity. The working capacity is shown in white in the figure, while the protection capacity is shown hatched. Fig. 1 shows the ring in the normal situation where only the working capacity is used, and it appears that working traffic is transferred between the nodes A and B as well as between the nodes A and C. The traffic is bi-directional, with transmission e.g. both from A to B and from B to A.

For example, it is conceivable that an STM-1 frame is transferred from A to B and correspondingly in the opposite direction. Typically, however, the fibres will allow simultaneous transfer of several channels in the same fibre. This may take place e.g. by time-division multiplex where e.g. an STM-4 frame or STM-8 frame may then be transferred, it being possible to use each of the four or eight time slots for a channel. This will be described more fully below.

In case of an error, working traffic which is transferred in a direction toward the error, is looped or coupled at a node close to the error into the protection path in the opposite direction away from the error. This is called head end bridge. The traffic is re-created at the other node close to the error by coupling the protection traffic, which is transferred in the direction toward the error, into the working path in the opposite direction away from the error. This is called tail end switch.

Fig. 2 shows an example of how this may look in case of a single fibre rupture. In this case, both of the two fibres 4 and 5 between the nodes A and D are interrupted. The bi-directional traffic between the nodes A and C, which is interrupted together with the fibres 4 and 5, will be re-created in the nodes A and D, as appears from the figure. In node A, head end bridge for the connection from A to C and tail end switch for the connection from C to A are performed, while, conversely, in node D head end bridge for the connection from C to A and tail end switch for the connection from A to C are performed. The traffic is thus detoured via the protection channels in the fibres 6, 2, 8 and 9, 3, 7 respectively.

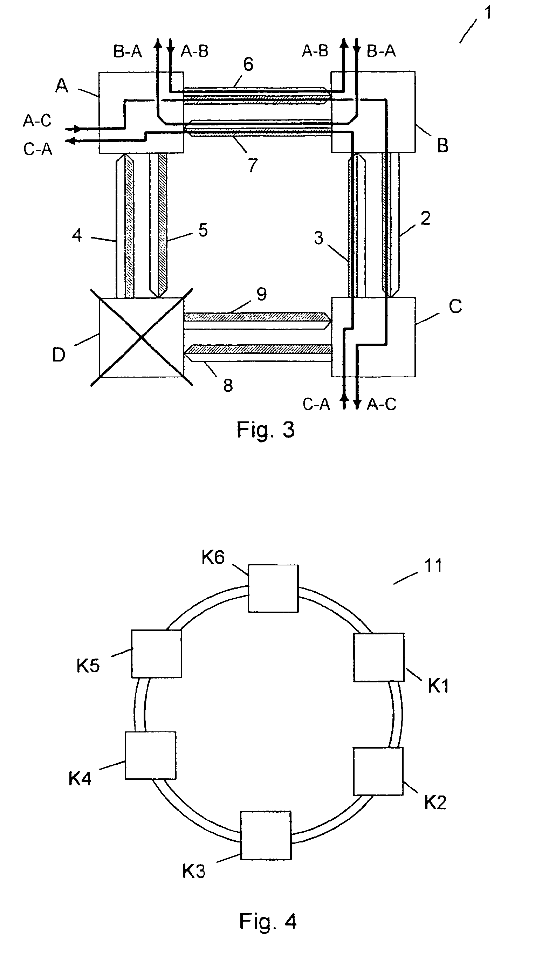

It is shown correspondingly in fig. 3 how the situation may look in the event that a node drops out, which corresponds to a fibre rupture on both sides of a node. The error is shown in the node D in the figure. Here, too, the bi-directional traffic between the nodes A and C may be re-created, as head end bridge as well as tail end switch takes place in the nodes A and C in the manner described above.

It is described more fully below how the situation looks when a time-division multiplex system is used in a manner known per se. Fig. 4 shows the network 11, which here has six nodes called K1, K2, K3, K4, K5 and K6. Like in the figures 1-3, the nodes are connected by two fibres here too, there being used one fibre for each transmission direction, each fibre accommodating working channels as well as protection channels. Since the established connections are bi-directional, as described above, we will, however, below just consider the two fibres as a transmission line having a plurality of time slots.

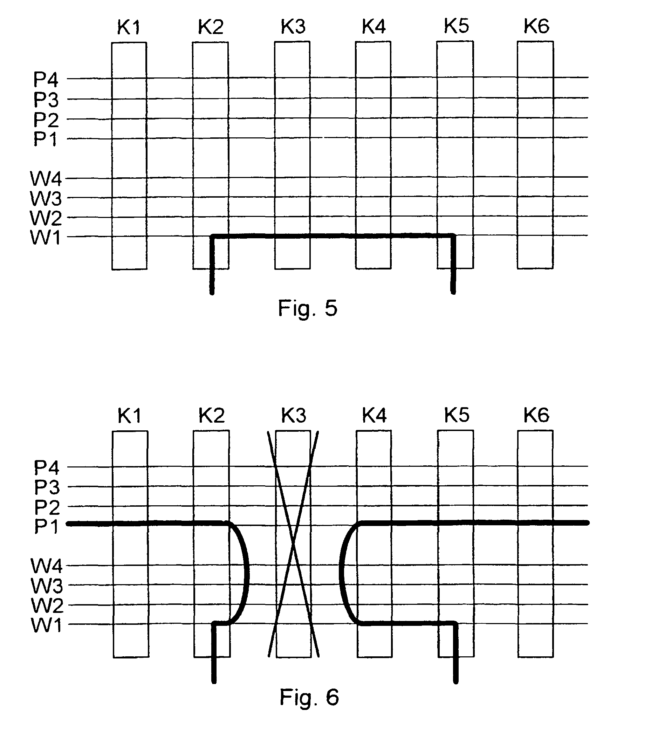

Fig. 5, in which the ring is shown in the open state for reasons of illustration so that the points on the left-hand side of K1 are connected to the right-hand side of K6, shows four working and four protection channels or time slots. The working channels are called W1-W4, while the protection channels are correspondingly called P1-P4. The eight channels or time slots thus correspond e.g. to an STM-8 frame. The figure shows the network in normal operation, and it appears that a connection is set up between the nodes K2 and K5 via the channel W1

Fig. 6 illustrates a situation in which drop-out of the node K3 occurs (or a double fibre rupture around this node occurs) so that the transmission between the nodes K2 and K5 can no longer take place as shown in fig. 1. The traffic in the interrupted connection is therefore coupled into the protection channel P1 in the adjacent nodes, i.e. K2 and K4, in a direction away from the error in the same manner as described above in relation to fig. 3. Of course, an arbitrary one of the four protection channels might be used; but the simplest control is obtained when e.g. P1 is used in connection with an interrupted connection in W1. As will be seen, the established connection may thus be re-created without problems in this situation.

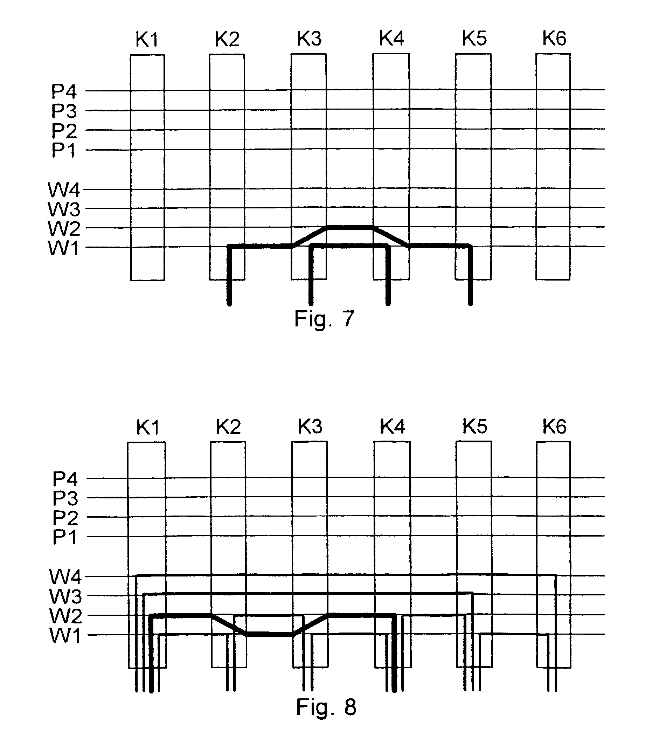

However, the situation is different if also so-called time slot interchange is used in the ring, and this will therefore be described briefly below. Fig. 7 shows an example where a connection is first established between the nodes K3 and K4, it being then desired to establish a connection between K2 and K5. When a control system introduces traffic into the ring, i.e. sets up connections, it will often try to place a channel on the lowermost time slots in a given fibre. The first connection K3-K4 is therefore placed in the time slot W1. Instead of placing the connection K2-K5 in e.g. the time slot W2, the control system will therefore typically place the new connection as shown in the figure so that W1 is used from K2 to K3 and from K4 to K5, while W2 is used from K3 to K4 where W1 is occupied. Thus, time slot interchange or channel change takes place in the nodes K3 and K4.

Fig. 8 shows another example where a number of connections have already been set up, as shown in thin line. When it is subsequently desired to set up a connection between K1 and K4, the existing connections would prevent this if time slot interchange was not possible. With time slot interchange, the connection may be placed as shown in thick line in the figure, using the time slot W1 and the time slot W2, respectively.

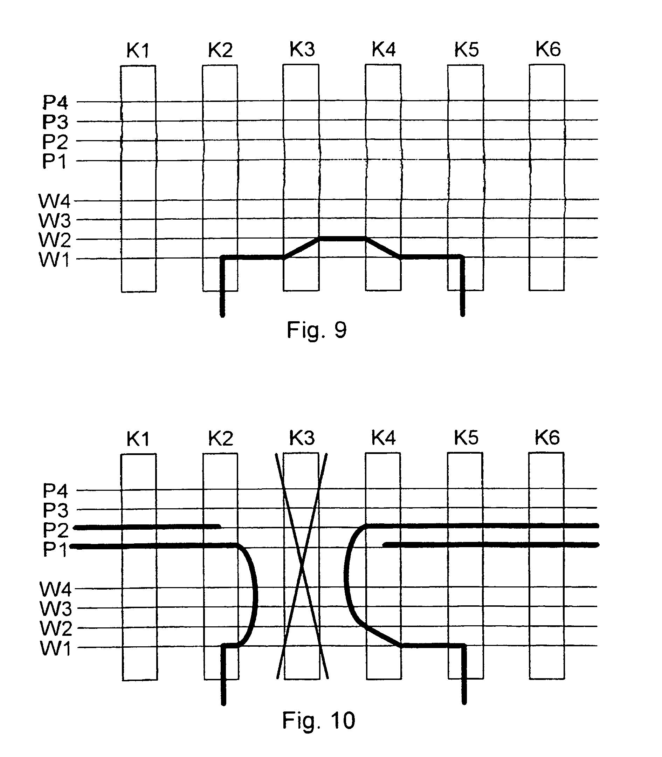

Figures 9 and 10 show how the use of time slot interchange may be a problem when in case of certain error types it is attempted to re-create the traffic by means of the protection channels. The connection in fig. 9 corresponds to the one shown in fig. 7 and thus uses the time slot W1 from K2 to K3 and from K4 to K5, while W2 is used from K3 to K4. Thus, time slot interchange or channel change takes place in the nodes K3 and K4. Fig. 10 shows what happens when the node K3 is interrupted. In the node K2, the interrupted connection is coupled from W1 to the protection channel P1 as W1 was used between K2 and K3. In the node K4, the interrupted connection is correspondingly coupled from W2 to the protection channel P2, as W2 was used between K4 and K3. Since the protection channels P1 and P2. are not connected to each other anywhere else in the ring, both of the two protection channels will have one end unconnected, i.e. the connection cannot be re-established, as is also shown in fig. 10. This means that in this situation the protection ring does not have the intended effect, and the traffic will be lost.

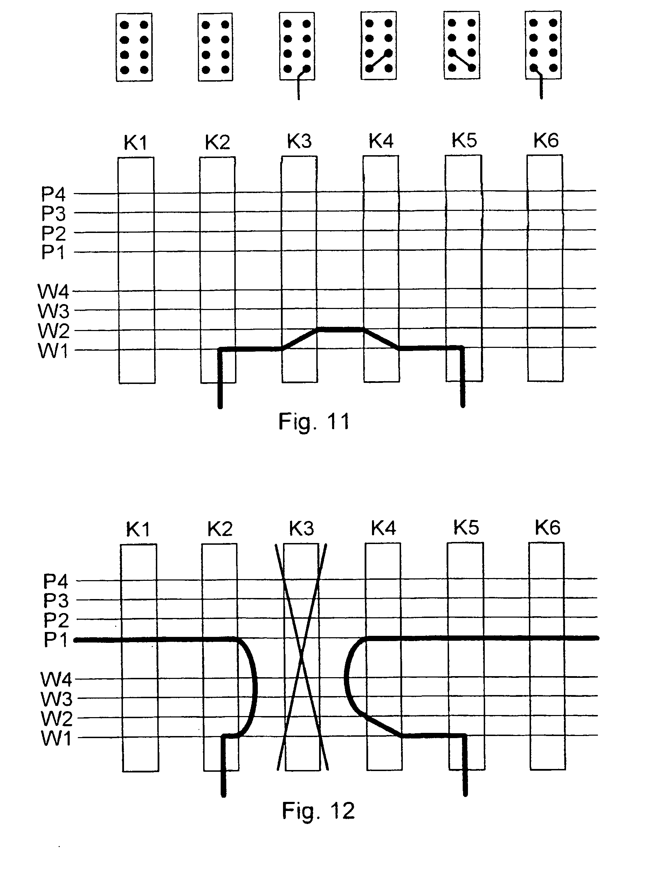

Figs. 11 and 12 show how this may be solved according to the invention. Fig. 11 shows that a connection quite like the connection shown in fig. 9 is set up. It moreover appears from the top of the figure that each node has a "map" showing how its left adjacent node has connected each of the channels W1-W4 on the right-hand side with the corresponding channels (time slots) on the left-hand side. For example, W1 on the left-hand side of K3 is connected to W2 on the right-hand side of K3, and this is therefore reflected in the map which is registered in the node K4. Correspondingly, it can be seen on the map in K6 that W2 on the left-hand side of K5 is not connected to the right-hand side of K5, as the set-up connection ends in K5. Only one set-up connection is shown for clarity; but, in practice there will almost always be a large number of simultaneously set-up connections, of course.

If the node K3 now drops out, as shown in fig. 12, the interrupted connection will be connected in the node K2 from W1 to P1, as described before, because no time slot interchange occurred in this node. In the node K4, the interrupted connection on the left side from W2, which was used between K4 and K3, is now connected to the protection channel P1, as it appears from the map registered in K4 that W2 on the right-hand side of K3 was connected to W1 on the left-hand side of K3. In other words, it may be said that since K4 knows that K3 switches from W2 to W1, it will, even in case of a rupture in K3, connect W2 to P1 in order to compensate for the change in the K3 now interrupted.

The idea is thus that each node knows how the connections are set-up in the left adjacent node. When a node drops out, the adjacent node on the right-hand side thereof will thus be able to compensate for the channel changes or time slot interchanges which occurred before the rupture in the interrupted node, and the connections can thus also be re-established in these situations. It should be noted that right and left may be interchanged, of course, so that each node knows how the connections are set-up in the right adjacent node, as the network is constructed symmetrically.

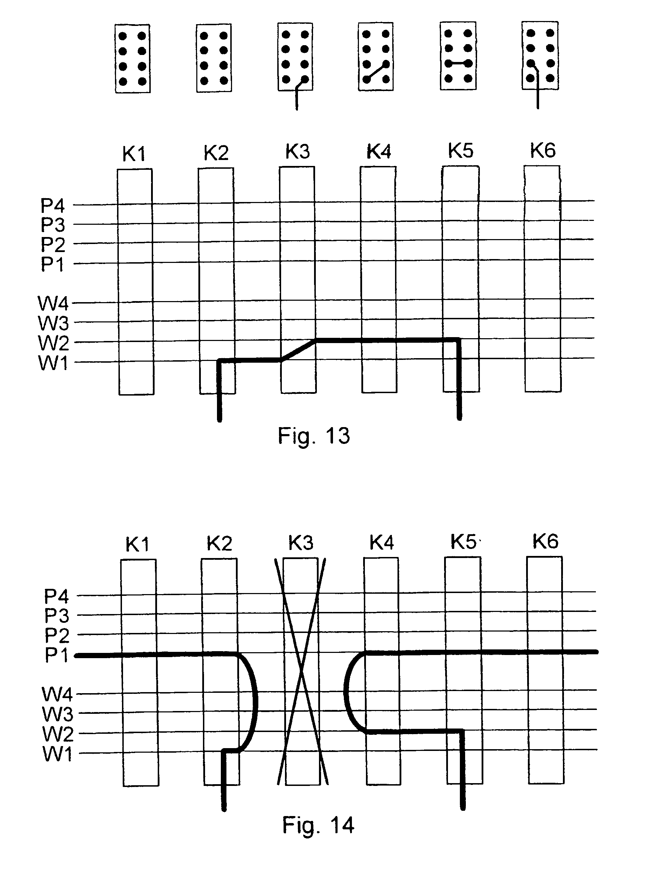

One of the advantages of this solution is that it does not require that the set-up connections at the ends, i.e. closest to the nodes to be connected, are to use the same time slot, as shown here with the time slot W1 at both ends. This appears from figs. 13 and 14, which correspond completely to figs. 11 and 12, merely with the difference that just a single channel change takes place in the connection originally set up so that the connection at one end uses the channel W1 and at the other end uses the channel W2. As described above, K4 will connect W2 to P1, and it makes no difference that W2 is used here between K4 and K5 instead of W1 in figs. 11 and 12. This may be a problem in certain other possible solutions.

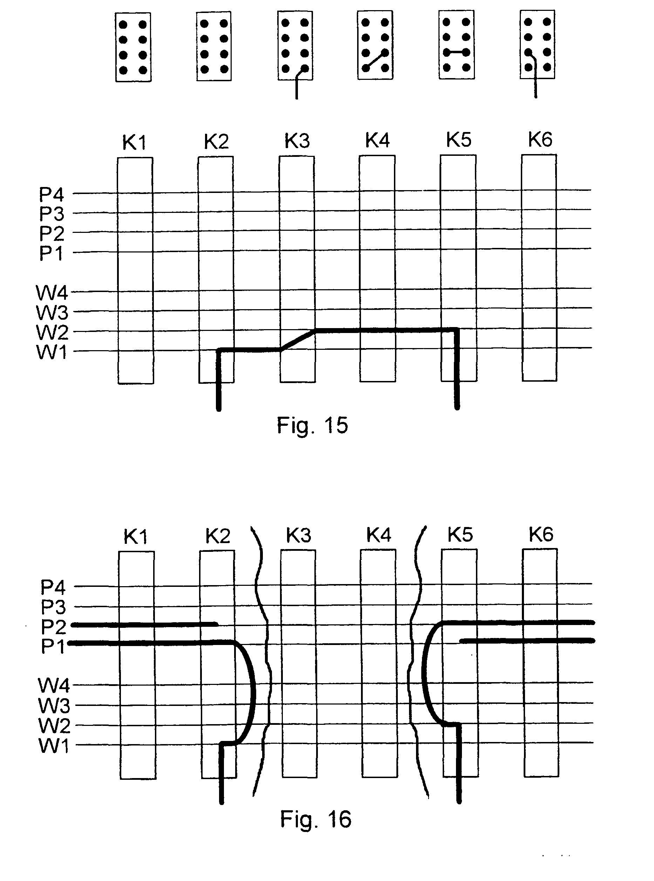

Since each individual node or network element just knows about the set-up in one other node, viz. its adjacent node, then, with this principle, the network cannot handle situations where more than one node drops out or where the network is divided into segments, which is referred to as segmentation, because of several errors. This is shown in figs. 15 and 16, of which fig. 15 corresponds completely to fig. 13, while fig. 16 shows that an error has taken place so that the nodes K3 and K4 have dropped out or are isolated in a segment of the network. Since it is just K4 which knows about the set-up of the connection in K3, it is no longer possible to re-establish the connection. Like before, K2 will connect W1 to P1, and since the map of K5 merely indicates that W2 is coupled straight through in K4, then K5 will connect W2 to P2, and it is thus not possible to establish any auxiliary connection since P1 and P2 are no longer connected to each other.

Thus, like in the prior art, this solution can re-establish the connection when a single rupture of a transmission line between two nodes has taken place. In case of drop-out of a node the traffic can be saved, with the exception of the traffic to the dropped-out node itself, also even if channel change takes place, and no matter whether each connection uses the same channel at both ends of the connection. In case of segmentation, however, the traffic cannot be saved in all cases.

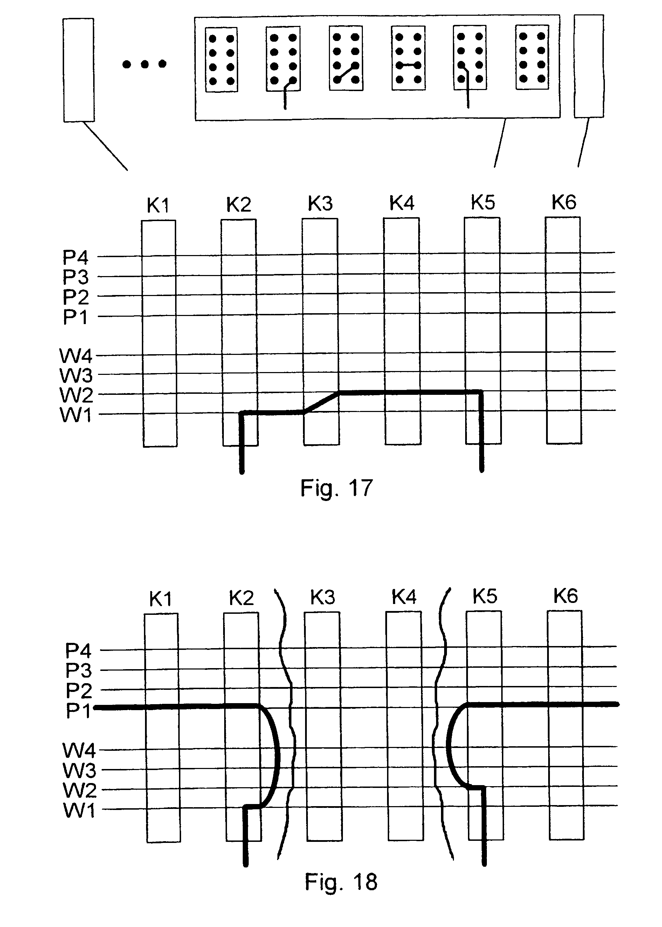

Figs. 17 and 18 show an alternative embodiment of the invention which is also capable of ensuring that the connections are maintained in the situations where segmentation of the network takes place. As appears from the upper part of fig. 17, each node here has a map which shows how the working channels have been set-up in each of the nodes of the network. The map shown is the one registered in K5; but, as is illustrated, a quite similar map is present in the other nodes.

Fig. 18, in the same manner as fig. 16, shows a situation where an error has taken place so that the nodes K3 and K4 have dropped out or are isolated in a segment of the network. Like before, K2 will connect W1 to P1, and since K5 now knows about the set-up in both K3 and K4 (as well as all other nodes), it is known that W2 on the right-hand side of K4 was connected to W1 on the left-hand side of K3 before the rupture. K5 can therefore directly connect W2 to P1, whereby the auxiliary connection via P1 is established. Connections which had been set up to the dropped-out nodes will be lost of course like in all other situations; but, on the other hand, K3 and K4 can still communicate with each other if just segmentation is involved.

The principle is thus that when all nodes know how the set-up has been performed in each of the other nodes, it will be possible to allow the node immediately on the right-hand side of the rupture to compensate for the channel changes or time slot interchanges that took place in the part of the network now interrupted. It is clear that the compensation may equally well take place in the node which is immediately to the left of the rupture. Instead of registering the mentioned map in each individual node, it is also conceivable that the map is instead registered in a control or monitoring system which is associated with the network, and it may then be the control or monitoring system that provides for the setting-up of the auxiliary connection, as described; but, of course, this requires that the remaining part of the network where the auxiliary connection is to be set up, is not isolated by the rupture from the control or monitoring system.

Thus, like in the prior art, this solution is capable of re-establishing the connection when a single rupture of a transmission line between two nodes has taken place. In case of drop-out of a node, the traffic can be saved, with the exception of the traffic to the dropped-out node itself, also even if channel change takes place, and no matter whether each connection uses the same channel at both ends of the connection. The traffic can also be saved as just described in case of segmentation.

The solution described last is therefore the one that allows for most situations; but, on the other hand, it is of course more complex in its structure, since, as described, each individual node is to know about the set-up in each of the others. In addition to storage space in the nodes, transmission capacity has to be used for transferring the set-up information to the individual nodes. The embodiment described first will therefore be preferred in many cases, it being then merely accepted that the traffic cannot be saved in any event in case of segmentation. Compromise solutions are also conceivable. If, e.g., each node has a map of how the two closest nodes are set-up., the traffic may be re-created also in the situations where two adjacent nodes drop out, corresponding to figs. 16 and 12; but not if three or more nodes drop out.

Although a preferred embodiment of the present invention has been described and shown, the invention is not restricted to it, but may also be embodied in other ways within the scope of the subject-matter defined in the following claims. For example, instead of the described MS SPRing having two fibres, other types of rings may be used, such as e.g. an MS SPRing having four fibres, or the ring may be adapted such that protection channels are just provided for some of the active working channels. Furthermore, the individual channels may be transmitted at independent wavelengths in a wavelength-division multiplex system instead of in a time-division multiplex system, or they may be transferred on their respective parallel cables. Finally, it should be mentioned that in normal operation, i.e. without errors, the protection channels may be utilized for the transmission of low priority traffic, without this being of any importance for the mode of operation of the invention.

## Claims

1. A method of transmitting data in a ring-shaped teletransmission network (1; 11) which is composed of a plurality of network elements (A, B, C, D; K1, K2, K3, K4, K5, K6) so that each network element is at least connected to two other network elements in the ring-shaped network by transmission lines,
and a plurality of parallel channels may be transferred on each transmission line, some of said channels forming primary channels (W1, W2, W3, W4), others of said channels forming secondary channels (P1, P2, P3, P4) so that secondary channels correspond to at least some of the primary channels, and so that the secondary channels transport signals in a direction opposite to their corresponding primary channels along the ring,
wherein connections may be set up in the network between two network elements via a plurality of intermediate transmission lines and network elements so that a connection in each of the intermediate transmission lines uses one of the primary channels which has a corresponding secondary channel, it being possible for the connection to use different primary channels in each of said transmission lines,
and wherein, in case of drop-out of one or more transmission lines or one or more network elements (K3; K3, K4) in the ring-shaped network, an auxiliary connection may be established via the secondary channels in the remaining transmission lines for each of the connections set up via the dropped-out part of the network, said auxiliary connection connecting the two network elements (K2, K4; K2, K5) which, on their respective sides, are closest to the dropped-out part of the network, and said auxiliary connection being connected in these network elements to the primary channels associated with the connection in a direction away from the dropped-out part of the network,
**characterized in that**
it is registered for at least some of the network elements how primary channels on one side of an element are connected to primary channels on the other side of the element,
in a first one (K2) of said two closest network elements the secondary channel (P1) associated with each auxiliary connection is connected to the corresponding primary channel (W1),
and in the second one (K4; K5) of the two network elements the secondary channel (P1) is connected to a primary channel (W2) which is determined on the basis of the registration of the network element or elements which are present in the dropped-out part of the network, so that each primary channel in the first one (K2) of said two closest network elements is connected via the auxiliary connection to the same primary channel in the second one (K4; K5) of the two network elements as before the rupture.

2. A method according to claim 1, **characterized in that** the same secondary channel (P1) is used in each of the remaining transmission lines for each auxiliary connection.

3. A method according to claim 1 or 2, **characterized in that** said registration is performed in the individual network elements.

4. A method according to claim 3, **characterized in that** registration is performed in each network element for each of the other network elements.

5. A method according to claim 3, **characterized in that** registration is performed in each network element for only some of the other network elements.

6. A method according to claim 5, **characterized in that** registration is performed in each network element for only one of the adjacent network elements of the element.

7. A network element for a ring-shaped teletransmission network (1; 11) which is composed of a plurality of such network elements (A, B, C, D; K1, K2, K3, K4, K5, K6) so that each network element is at least connected to two other network elements in the ring-staped network by transmission lines,
and a plurality of parallel channels may be transferred on each transmission line, some of said channels forming primary channels (W1, W2, W3, W4), others of said channels forming secondary channels (P1, P2, P3, P4) so that secondary channels correspond to each of at least some of the primary channels, and so that the secondary channels transport signals in a direction opposite to their corresponding primary channels along the ring,
wherein connections may be set up in the network between two network elements via a plurality of intermediate transmission lines and network elements so that a connection in each of the intermediate transmission lines uses one of the primary channels which has a corresponding secondary channel, it being possible for the connection to use different primary channels in each of said transmission lines,
and wherein, in case of drop-out of one or more transmission lines or one or more network elements (K3; K3, K4) in the ring-shaped network, an auxiliary connection may be established via the secondary channels in the remaining transmission lines for each of the connections set up via the dropped-out part of the network, said auxiliary connection connecting the two network elements (K2, K4; K2, K5) which, on their respective sides, are closest to the dropped-out part of the network, and said auxiliary connection being connected in these network elements to the primary channels associated with the connection in a direction away from the dropped-out part of the network,
**characterized in that** the network element is adapted, for one or more other network elements, to register how primary channels on their one side are connected to primary channels on their other side, and that the network element, in the situation where it forms one of said two closest network elements, is adapted to connect the secondary channel (P1) associated with each auxiliary connection to a primary channel (W2) determined on the basis of the registration of the other network element or elements which are present in the dropped-out part of the network, so that each primary channel in the first one (K2) of said two closest network elements is connected via the auxiliary connection to the same primary channel in the second one (K4; K5) of the two network elements as before the rupture.

8. A network element according to claim 7, **characterized in that** it is adapted to perform registerized **in that** it is adapted to perform registration for each of the other network elements.

9. A network element according to claim 7, **characterized in that** it is adapted to perform registration for only some of the other network elements.

10. A network .element according to claim 9, **characterized in that** it is adapted to perform registration for only one of its adjacent network elements.

11. A ring-shaped teletransmission network (1; 11) which is composed of a plurality of network elements (A, B, C, D; K1, K2, K3, K4, K5, K6) so that each network element is at least connected to two other network elements in the ring-shaped network by transmission lines,
and a plurality of parallel channels may be transferred on each transmission line, some of said channels forming primary channels (W1, W2, W3, W4), others of said channels forming secondary channels (P1, P2, P3, P4) so that secondary channels correspond to each of at least some of the primary channels, and so that the secondary channels transport signals in a direction opposite to their corresponding primary channels along the ring,
wherein connections may be set up in the network between two network elements via a plurality of intermediate transmission lines and network elements so that a connection in each of the intermediate transmission lines uses one of the primary channels which has a corresponding secondary channel, it being possible for the connection to use different primary channels in each of said transmission lines,
and wherein, in case of drop-cut of one or more transmission lines or one or more network elements (K3; K3, K4) in the ring-shaped network, an auxiliary connection may be established via the secondary channels in the remaining transmission lines for each of the connections set up via the dropped-out part of the network, said auxiliary connection connecting the two network elements (K2, K4; K2, K5) which, on their respective sides, are closest to the dropped-out part of the network, and said auxiliary connection being connected in these network elements to the primary channels associated with the connection in a direction away from the dropped-out part of the network,
**characterized in that**
the network comprises means for registering for at least some of the network elements how primary channels on one side of an element are connected to primary channels on the other side of the element,
means for connecting, in a first one (K2) of said two closest network elements, the secondary channel (P1) associated with each auxiliary connection to the corresponding primary channel (W1),
and means for connecting, in the second one (K4; K5) of the two network elements, the secondary channel (P1) to a primary channel (W2) which is determined on the basis of the registration of the network element or elements which are present in the dropped-out part of the network, so that each primary channel in the first one (K2) of said two closest network elements is connected via the auxiliary connection to the same primary channel in the second one (K4; K5) of the two network elements as before the rupture.

12. A network according to claim 11, **characterized in that** it is adapted to use the same secondary channel (P1) in each of the remaining transmission lines for each auxiliary connection.

13. A network according to claim 11 or 12, **characterized in that** the means for performing said registration are present in the individual network elements.

14. A network according to claim 13, **characterized in that** each network element is adapted to perform registration for each of the other network elements.

15. A network according to claim 13, **characterized in that** each network element is adapted to perform registration for only some of the other network elements.

16. A network according to claim 15, **characterized in that** each network element is adapted to perform registration for only one of the adjacent network elements of the element.

17. A network according to claims 11-16, **characterized in that** it is an optical network.

18. A network according to claim 17, **characterized in that** each transmission line is formed by an optical fibre for each transmission direction.

19. A network according to claims 11-18, **characterized in that** each of the parallel channels is a channel in a time-division multiplex system.

20. A network according to claims 11-18, **characterized in that** each channel is transmitted at an independent wavelength in a wavelength-division multiplex system.

21. A network according to claims 11-18, **characterized in that** the parallel channels are transmitted in a plurality of parallel cables.

22. A network according to claims 11-21, **characterized in that** it is adapted to perform transmission of data according to a Synchronous Digital Hierarchy (SDH).

23. A network according to claim 22, **characterized in that** it is constructed as an MS SPRing.

24. A network according to claims 11-23, **characterized in that** the secondary channels (P1, P2, P3, P4. may be used for the transmission of low priority data traffic in normal operation, and that this traffic may be interrupted to accommodate said auxiliary connections in case of drop-out of one or more transmission lines or one or more network elements in the network.

25. A network according to claims 11-23, **characterized in that** the secondary channels (P1, P2, P3, P4) are reserved for said auxiliary connections.

## Patentansprüche

1. Verfahren zur Übertragung von Daten in einem ringförmigen Fernübertragungsnetzwerk (1; 11), das aus einer Mehrzahl von Netzwerkelementen (A, B, C, D; K1, K2, K3, K4, K5, K6) zusammengesetzt ist, so dass jedes Netzwerkelement mindestens mit zwei anderen Netzwerkelementen in dem ringförmigen Netzwerk durch Übertragungsleitungen verbunden ist,
und eine Mehrzahl von parallelen Kanälen auf jeder Übertragungsleitung weitergeleitet werden kann, wobei einige der Kanäle primäre Kanäle (W1, W2, W3, W4) bilden, andere der Kanäle sekundäre Kanäle (P1, P2, P3, P4) bilden, so dass sekundäre Kanäle mindestens einigen der primären Kanäle entsprechen und so dass die sekundären Kanäle Signale in einer ihren entsprechenden primären Kanälen entgegengesetzten Richtung entlang dem Ring transportieren,
wobei in dem Netzwerk zwischen zwei Netzwerkelementen über eine Mehrzahl von dazwischenliegenden Übertragungsleitungen und Netzwerkelementen Verbindungen aufgebaut werden können, so dass eine Verbindung in jeder der dazwischenliegenden Übertragungsleitungen einen von den primären Kanälen verwendet, der einen entsprechenden sekundären Kanal aufweist, wobei es für die Verbindung möglich ist, in jeder der Übertragungsleitungen unterschiedliche primäre Kanäle zu verwenden,
und wobei im Fall eines Ausfalls von einer oder mehreren Übertragungsleitungen oder einem oder mehreren Netzwerkelementen (K3; K3, K4) in dem ringförmigen Netzwerk für jede der über den ausgefallenen Teil des Netzwerks aufgebauten Verbindungen eine Hilfsverbindung über die sekundären Kanäle in den verbleibenden Übertragungsleitungen erstellt werden kann, wobei die Hilfsverbindung die zwei Netzwerkelemente (K2, K4; K2, K5) verbindet, die auf ihren respektiven Seiten dem ausgefallenen Teil des Netzwerks am nächsten gelegen sind, und wobei die Hilfsverbindung in diesen Netzwerkelementen mit den primären Kanälen, die der Verbindung zugeordnet sind, in einer Richtung weg von dem ausgefallenen Teil des Netzwerks verbunden ist,
**dadurch gekennzeichnet, dass**
es für mindestens einige der Netzwerkelemente registriert wird, wie primäre Kanäle auf einer Seite eines Elements mit primären Kanälen auf der anderen Seite des Elements verbunden sind,
in einem ersten (K2) der zwei nächstgelegenen Netzwerkelemente der sekundäre Kanal (P1), der jeder Hilfsverbindung zugeordnet ist, mit dem entsprechenden primären Kanal (W1) verbunden ist,
und in dem zweiten (K4; K5) der zwei Netzwerkelemente der sekundäre Kanal (P1) mit einem primären Kanal (W2) verbunden ist, der auf der Grundlage der Registrierung des/der Netzwerkelements oder -elemente, das/die im ausgefallenen Teil des Netzwerks vorhanden ist/sind, bestimmt ist, so dass jeder primäre Kanal in dem ersten (K2) der zwei nächstgelegenen Netzwerkelemente über die Hilfsverbindung mit demselben primären Kanal in dem zweiten (K4; K5) der zwei Netzwerkelemente wie vor der Unterbrechung verbunden ist.

2. Verfahren nach Anspruch 1, **dadurch gekennzeichnet, dass** für jede Hilfsverbindung derselbe sekundäre Kanal (P1) in jeder der verbleibenden Übertragungsleitungen verwendet wird.

3. Verfahren nach Anspruch 1 oder 2, **dadurch gekennzeichnet, dass** die Registrierung in den einzelnen Netzwerkelementen ausgeführt wird.

4. Verfahren nach Anspruch 3, **dadurch gekennzeichnet, dass** eine Registrierung in jedem Netzwerkelement für jedes der anderen Netzwerkelemente ausgeführt wird.

5. Verfahren nach Anspruch 3, **dadurch gekennzeichnet, dass** eine Registrierung in jedem Netzwerkelement für nur einige der anderen Netzwerkelemente ausgeführt wird.

6. Verfahren nach Anspruch 5, **dadurch gekennzeichnet, dass** eine Registrierung in jedem Netzwerkelement für nur eines der benachbarten Netzwerkelemente des Elements ausgeführt wird.

7. Netzwerkelement für ein ringförmiges Fernübertragungsnetzwerk (1; 11), das aus einer Mehrzahl von solchen Netzwerkelementen (A, B, C, D; K1, K2, K3, K4, K5, K6) zusammengesetzt ist, so dass jedes Netzwerkelement mindestens mit zwei anderen Netzwerkelementen in dem ringförmigen Netzwerk durch Übertragungsleitungen verbunden ist,
und eine Mehrzahl von parallelen Kanälen auf jeder Übertragungsleitung weitergeleitet werden kann, wobei einige der Kanäle primäre Kanäle (W1, W2, W3, W4) bilden, andere der Kanäle sekundäre Kanäle (P1, P2, P3, P4) bilden, so dass sekundäre Kanäle jedem von mindestens einigen der primären Kanäle entsprechen und so dass die sekundären Kanäle Signale in einer ihren entsprechenden primären Kanälen entgegengesetzten Richtung entlang dem Ring transportieren,
wobei in dem Netzwerk zwischen zwei Netzwerkelementen über eine Mehrzahl von dazwischenliegenden Übertragungsleitungen und Netzwerkelementen Verbindungen aufgebaut werden können, so dass eine Verbindung in jeder der dazwischenliegenden Übertragungsleitungen einen von den primären Kanälen verwendet, der einen entsprechenden sekundären Kanal aufweist, wobei es für die Verbindung möglich ist, in jeder der Übertragungsleitungen unterschiedliche primäre Kanäle zu verwenden,
und wobei im Fall eines Ausfalls von einer oder mehreren Übertragungsleitungen oder einem oder mehreren Netzwerkelementen (K3; K3, K4) in dem ringförmigen Netzwerk für jede der über den ausgefallenen Teil des Netzwerks aufgebauten Verbindungen eine Hilfsverbindung über die sekundären Kanäle in den verbleibenden Übertragungsleitungen erstellt werden kann, wobei die Hilfsverbindung die zwei Netzwerkelemente (K2, K4; K2, K5) verbindet, die auf ihren respektiven Seiten dem ausgefallenen Teil des Netzwerks am nächsten gelegen sind, und wobei die Hilfsverbindung in diesen Netzwerkelementen mit den primären Kanälen, die der Verbindung zugeordnet sind, in einer Richtung weg von dem ausgefallenen Teil des Netzwerks verbunden ist,
**dadurch gekennzeichnet, dass**
das Netzwerkelement angepasst ist, um für ein oder mehrere andere Netzwerkelemente zu registrieren, wie primäre Kanäle auf ihrer einen Seite mit primären Kanälen auf ihrer anderen Seite verbunden sind, und dass das Netzwerkelement in der Situation, in der es eines von den zwei nächstgelegenen Netzwerkelementen bildet, angepasst ist, um den sekundären Kanal (P1), der jeder Hilfsverbindung zugeordnet ist, mit einem primären Kanal (W2) zu verbinden, der auf der Grundlage der Registrierung des/der anderen Netzwerkelements oder -elemente, das/die im ausgefallenen Teil des Netzwerks vorhanden ist/sind, bestimmt ist, so dass jeder primäre Kanal in dem ersten (K2) der zwei nächstgelegenen Netzwerkelemente über die Hilfsverbindung mit demselben primären Kanal in dem zweiten (K4; K5) der zwei Netzwerkelemente wie vor der Unterbrechung verbunden ist.

8. Netzwerkelement nach Anspruch 7, **dadurch gekennzeichnet, dass** es angepasst ist, um eine Registrierung für jedes der anderen Netzwerkelemente auszuführen.

9. Netzwerkelement nach Anspruch 7, **dadurch gekennzeichnet, dass** es angepasst ist, um eine Registrierung für nur einige der anderen Netzwerkelemente auszuführen.

10. Netzwerkelement nach Anspruch 9, **dadurch gekennzeichnet, dass** es angepasst ist, um eine Registrierung für nur eines seiner benachbarten Netzwerkelemente auszuführen.

11. Ringförmiges Fernübertragungsnetzwerk (1; 11), das aus einer Mehrzahl von Netzwerkelementen (A, B, C, D; K1, K2, K3, K4, K5, K6) zusammengesetzt ist, so dass jedes Netzwerkelement mindestens mit zwei anderen Netzwerkelementen in dem ringförmigen Netzwerk durch Übertragungsleitungen verbunden ist,
und eine Mehrzahl von parallelen Kanälen auf jeder Übertragungsleitung weitergeleitet werden kann, wobei einige der Kanäle primäre Kanäle (W1, W2, W3, W4) bilden, andere der Kanäle sekundäre Kanäle (P1, P2, P3, P4) bilden, so dass sekundäre Kanäle jedem von mindestens einigen der primären Kanäle entsprechen und so dass die sekundären Kanäle Signale in einer ihren entsprechenden primären Kanälen entgegengesetzten Richtung entlang dem Ring transportieren,
wobei in dem Netzwerk zwischen zwei Netzwerkelementen über eine Mehrzahl von dazwischenliegenden Übertragungsleitungen und Netzwerkelementen Verbindungen aufgebaut werden können, so dass eine Verbindung in jeder der dazwischenliegenden Übertragungsleitungen einen von den primären Kanälen verwendet, der einen entsprechenden sekundären Kanal aufweist, wobei es für die Verbindung möglich ist, in jeder der Übertragungsleitungen unterschiedliche primäre Kanäle zu verwenden,
und wobei im Fall eines Ausfalls von einer oder mehreren Übertragungsleitungen oder einem oder mehreren Netzwerkelementen (K3; K3, K4) in dem ringförmigen Netzwerk für jede der über den ausgefallenen Teil des Netzwerks aufgebauten Verbindungen eine Hilfsverbindung über die sekundären Kanäle in den verbleibenden Übertragungsleitungen erstellt werden kann, wobei die Hilfsverbindung die zwei Netzwerkelemente (K2, K4; K2, K5) verbindet, die auf ihren respektiven Seiten dem ausgefallenen Teil des Netzwerks am nächsten gelegen sind, und wobei die Hilfsverbindung in diesen Netzwerkelementen mit den primären Kanälen, die der Verbindung zugeordnet sind, in einer Richtung weg von dem ausgefallenen Teil des Netzwerks verbunden ist,
**dadurch gekennzeichnet, dass**
das Netzwerk umfasst: Einrichtungen zum Registrieren für mindestens einige der Netzwerkelemente, wie primäre Kanäle auf einer Seite eines Elements mit primären Kanälen auf der anderen Seite des Elements verbunden sind,
Einrichtungen zum Verbinden des sekundären Kanals (P1), der jeder Hilfsverbindung zugeordnet ist, mit dem entsprechenden primären Kanal (W1) in einem ersten (K2) der zwei nächstgelegenen Netzwerkelemente,
und Einrichtungen zum Verbinden des sekundären Kanals (P1) mit einem primären Kanal (W2) in dem zweiten (K4; K5) der zwei Netzwerkelemente, der auf der Grundlage der Registrierung des/der Netzwerkelements oder -elemente, das/die im ausgefallenen Teil des Netzwerks vorhanden ist/sind, bestimmt ist, so dass jeder primäre Kanal in dem ersten (K2) der zwei nächstgelegenen Netzwerkelemente über die Hilfsverbindung mit demselben primären Kanal in dem zweiten (K4; K5) der zwei Netzwerkelemente wie vor der Unterbrechung verbunden ist.

12. Netzwerk nach Anspruch 11, **dadurch gekennzeichnet, dass** es angepasst ist, um denselben sekundären Kanal (P1) in jeder der verbleibenden Übertragungsleitungen für jede Hilfsverbindung zu verwenden.

13. Netzwerk nach Anspruch 11 oder 12, **dadurch gekennzeichnet, dass** die Einrichtungen zur Ausführung der Registrierung in den einzelnen Netzwerkelementen vorhanden sind.

14. Netzwerk nach Anspruch 13, **dadurch gekennzeichnet, dass** jedes Netzwerkelement angepasst ist, um eine Registrierung für jedes der anderen Netzwerkelemente auszuführen.

15. Netzwerk nach Anspruch 13, **dadurch gekennzeichnet, dass** jedes Netzwerkelement angepasst ist, um eine Registrierung für nur einige der anderen Netzwerkelemente auszuführen.

16. Netzwerk nach Anspruch 15, **dadurch gekennzeichnet, dass** jedes Netzwerkelement angepasst ist, um eine Registrierung für nur eines der benachbarten Netzwerkelemente des Elements auszuführen.

17. Netzwerk nach den Ansprüchen 11-16, **dadurch gekennzeichnet, dass** es ein optisches Netzwerk ist.

18. Netzwerk nach Anspruch 17, **dadurch gekennzeichnet, dass** jede Übertragungsleitung durch eine optische Faser für jede Übertragungsrichtung gebildet ist.

19. Netzwerk nach den Ansprüchen 11-18, **dadurch gekennzeichnet, dass** jeder der parallelen Kanäle ein Kanal in einem Zeitmultiplexsystem ist.

20. Netzwerk nach den Ansprüchen 11-18, **dadurch gekennzeichnet, dass** jeder Kanal bei einer unabhängigen Wellenlänge in einem Wellenlängenmultiplexsystem übertragen wird.

21. Netzwerk nach den Ansprüchen 11-18, **dadurch gekennzeichnet, dass** die parallelen Kanäle in einer Mehrzahl von parallelen Kabeln übertragen werden.

22. Netzwerk nach den Ansprüchen 11-21, **dadurch gekennzeichnet, dass** es angepasst ist, um eine Übertragung von Daten entsprechend einer Synchrondigitalhierarchie (SDH) auszuführen.

23. Netzwerk nach Anspruch 22, **dadurch gekennzeichnet, dass** es als ein MS SPRing (bidirektionaler Gemeinschaftsringschutz) konstruiert ist.

24. Netzwerk nach den Ansprüchen 11-23, **dadurch gekennzeichnet, dass** die sekundären Kanäle (P1, P2, P3, P4) für die Übertragung von Datenverkehr niedriger Priorität bei Normalbetrieb verwendet werden können und dass dieser Verkehr unterbrochen werden kann, um die Hilfsverbindungen im Fall eines Ausfalls von einer oder mehreren Übertragungsleitungen oder einem oder mehreren Netzwerkelementen in dem Netzwerk auf zunehmen .

25. Netzwerk nach den Ansprüchen 11-23, **dadurch gekennzeichnet, dass** die sekundären Kanäle (P1, P2, P3, P4) für die Hilfsverbindungen reserviert sind.

## Revendications

1. Procédé de transmission de données dans un réseau de télétransmission à configuration en anneau (1; 11) qui est constitué d'une pluralité d'éléments de réseau (A, B, C, D; K1, K2, K3, K4, K5, K6) tel que chaque élément du réseau soit au moins connecté à deux autres éléments du réseau dans le réseau à configuration en anneau par des lignes de transmission,
et une pluralité de canaux en parallèle peuvent être transférés sur chaque ligne de transmission, certains desdits canaux formant des canaux primaires (W1, W2, W3, W4), d'autres desdits canaux formant des canaux secondaires (P1, P2, P3, P4), de façon que les canaux secondaires correspondent au moins à certains des canaux primaires et de façon que les canaux secondaires transportent des signaux en sens inverse à leurs canaux primaires correspondants sur l'anneau,
dans lequel des connexions peuvent être établies dans le réseau entre deux éléments du réseau par l'intermédiaire d'une pluralité de lignes de transmission intermédiaires et d'éléments du réseau de telle sorte qu'une connexion dans chacune des lignes de transmission intermédiaire utilise l'un des canaux primaires ayant un canal secondaire correspondant, étant possible que la connexion utilise des canaux primaires différents dans chacune desdites lignes de transmission,
et dans lequel, en cas de perte de signal d'une ou plusieurs lignes de transmission ou d'un ou plusieurs éléments du réseau (K3; K3, K4) dans le réseau à configuration en anneau, une connexion auxiliaire puisse être établie par l'intermédiaire des canaux secondaires dans les lignes de transmission restantes pour chacune des connexions établies par l'intermédiaire de la partie du réseau ayant perdu le signal, ladite connexion auxiliaire connectant les deux éléments du réseau (K2, K4; K2, K5) qui, de leurs côtés respectifs, sont les plus proches de la partie bloquée du réseau et ladite connexion auxiliaire étant connectée dans ces éléments du réseau aux canaux primaires associés à la connexion en s'éloignant de la partie bloquée du réseau,
**caractérisé en ce que**
on enregistre au moins pour certains des éléments du réseau la façon dont les canaux primaires d'un côté d'un élément sont connectés à des canaux primaires de l'autre côté de l'élément,
dans un premier élément (K2) desdits deux éléments du réseau les plus proches, le canal secondaire (P1) associé à chaque connexion auxiliaire est connecté au canal primaire correspondant (W1),
et dans le second élément (K4; K5) des deux éléments du réseau, le canal secondaire (P1) est connecté à un canal primaire (W2) qui est déterminé en se basant sur l'enregistrement de l'élément ou des éléments du réseau qui sont présents dans la partie bloquée du réseau, de façon que chaque canal primaire dans le premier élément (K2) desdits deux éléments du réseau les plus proches est connecté par l'intermédiaire de la connexion auxiliaire au même canal primaire dans le second élément (K4; K5) des deux éléments du réseau comme avant la rupture.

2. Procédé selon la revendication 1, **caractérisé en ce que** le même canal secondaire (P1) est utilisé dans chacune des lignes de transmission restantes pour chaque connexion auxiliaire.

3. Procédé selon la revendication 1 ou 2, **caractérisé en ce que** ledit enregistrement est effectué dans chacun des éléments du réseau.

4. Procédé selon la revendication 3, **caractérisé en ce que** l'enregistrement est effectué dans chaque élément du réseau pour chacun des autres éléments du réseau.

5. Procédé selon la revendication 3, **caractérisé en ce que** l'enregistrement est effectué dans chaque élément du réseau pour certains seulement des autres éléments du réseau.

6. Procédé selon la revendication 5, **caractérisé en ce que** l'enregistrement est effectué dans chaque élément du réseau pour un seul des éléments du réseau adjacent à l'élément.

7. Élément de réseau pour un réseau de télétransmission à configuration en anneau (1; 11) qui est constitué d'une pluralité de tels éléments du réseau (A, B, C, D; K1, K2, K3, K4, K5 , K6) de façon que chaque élément du réseau soit au moins connecté à deux autres éléments du réseau dans le réseau à configuration en anneau par des lignes de transmission,
et une pluralité de canaux en parallèle peuvent être transférés sur chaque ligne de transmission, certains desdits canaux formant des canaux primaires (W1, W2, W3, W4) d'autres desdits canaux formant des canaux secondaires (P1, P2, P3, P4) de telle sorte que les canaux secondaires correspondent à chacun d'au moins certains des canaux primaires et de façon que les canaux secondaires transportent des signaux en sens inverse à leurs canaux primaires correspondants sur l'anneau,
dans lequel des connexions peuvent être établies dans le réseau entre deux éléments du réseau par l'intermédiaire d'une pluralité de lignes de transmission intermédiaires et d'éléments du réseau, de telle sorte qu'une connexion dans chacune des lignes de transmission intermédiaire utilise l'un des canaux primaires comportant un canal secondaire correspondant, étant possible que la connexion utilise différents canaux primaires dans chacune desdites lignes de transmission,
et dans lequel, en cas de blocage d'une ou plusieurs lignes de transmission ou d'un ou plusieurs éléments du réseau (K3; K3, K4) dans le réseau à configuration en anneau, une connexion auxiliaire puisse être établie par l'intermédiaire des canaux secondaires dans les lignes de transmission restantes pour chacune des connexions établies par l'intermédiaire de la partie bloquée du réseau, ladite connexion auxiliaire connectant les deux éléments du réseau (K2, K4; K2, K5) qui, de leurs côtés respectifs, sont les plus proches de la partie bloquée du réseau et ladite connexion auxiliaire étant connectée dans ces éléments du réseau aux canaux primaires associés à la connexion en s'éloignant de la partie bloquée du réseau,
**caractérisé en ce que** l'élément du réseau est adapté, pour un ou plusieurs autres éléments du réseau, à enregistrer la façon dont les canaux primaires d'un côté sont connectés aux canaux primaires sur leur autre côté et que l'élément du réseau, dans le cas où il forme l'un desdits éléments du réseau les plus proches, est adapté à connecter le canal secondaire (P1) associé à chaque connexion auxiliaire à un canal primaire (W2) déterminé en se basant sur l'enregistrement de l'autre élément ou des autres éléments du réseau qui sont présents dans la partie bloquée du réseau, de telle sorte que chaque canal primaire dans le premier élément (K2) desdits deux éléments du réseau les plus proches est connecté par l'intermédiaire de la connexion auxiliaire au même canal primaire dans le second élément (K4; K5) des deux éléments du réseau comme avant la rupture.

8. Élément de réseau selon la revendication 7, **caractérisé en ce qu'**il est adapté à effectuer un enregistrement pour chacun des autres éléments du réseau.

9. Élément de réseau selon la revendication 7, **caractérisé en ce qu'**il est adapté à effectuer un enregistrement pour certains seulement des autres éléments du réseau.

10. Élément de réseau selon la revendication 9, **caractérisé en ce qu'**il est adapté à effectuer un enregistrement pour un seul de ses éléments du réseau adjacents.

11. Réseau de télétransmission à configuration en anneau (1; 11) qui est constitué d'une pluralité d'éléments de réseau (A, B, C, D; K1, K2, K3, K4, K5, K6) tel que chaque élément du réseau soit au moins connecté à deux autres éléments du réseau dans le réseau à configuration en anneau par des lignes de transmission,
et une pluralité de canaux en parallèle peuvent être transférés sur chaque ligne de transmission, certains desdits canaux formant des canaux primaires (W1, W2, W3, W4), d'autres desdits canaux formant des canaux secondaires (P1, P2, P3, P4), de telle sorte que les canaux secondaires correspondent à chacun d'au moins certains des canaux primaires et de façon que les canaux secondaires transportent des signaux en sens inverse à leurs canaux primaires correspondants sur l'anneau,
dans lequel des connexions peuvent être établies dans le réseau entre deux éléments du réseau par l'intermédiaire d'une pluralité de lignes de transmission intermédiaires et d'éléments du réseau, de telle sorte qu'une connexion dans chacune des lignes de transmission intermédiaire utilise l'un des canaux primaires ayant un canal secondaire correspondant, étant possible que la connexion utilise des canaux primaires différents dans chacune desdites lignes de transmission,
et dans lequel, en cas de blocage d'une ou plusieurs lignes de transmission ou d'un ou plusieurs éléments du réseau (K3; K3, K4) dans le réseau à configuration en anneau, une connexion auxiliaire puisse être établie par l'intermédiaire des canaux secondaires dans les lignes de transmission restantes pour chacune des connexions établies par l'intermédiaire de la partie bloquée du réseau, ladite connexion auxiliaire connectant les deux éléments du réseau (K2, K4; K2, K5) qui, sur leurs côtés respectifs, sont les plus proches de la partie bloquée du réseau, et ladite connexion auxiliaire étant connectée dans ces éléments du réseau aux canaux primaires associés à la connexion en s'éloignant de la partie bloquée du réseau,
**caractérisé en ce que**
le réseau comprend des moyens pour enregistrer, pour au moins certains des éléments du réseau, la façon dont les canaux primaires d'un côté d'un élément sont connectés aux canaux primaires de l'autre côté de l'élément,
des moyens pour connecter, dans un premier élément (K2) desdits deux éléments du réseau les plus proches, le canal secondaire (P1) associé à chaque connexion auxiliaire au canal primaire correspondant (W1),
et des moyens pour connecter, dans le second élément (K4; K5) des deux éléments du réseau, le canal secondaire (P1) à un canal primaire (W2) qui est déterminé en se basant sur l'enregistrement de l'élément ou des éléments du réseau qui sont présents dans la partie bloquée du réseau, de telle sorte que chaque canal primaire dans le premier élément (K2) desdits deux éléments du réseau les plus proches est connecté par l'intermédiaire de la connexion auxiliaire au même canal primaire dans le second élément (K4; K5) des deux éléments du réseau comme avant la rupture.

12. Réseau selon la revendication 11, **caractérisé en ce qu'**il est adapté à utiliser le même canal secondaire (P1) dans chacune des lignes de transmission restantes pour chaque connexion auxiliaire.

13. Réseau selon la revendication 11 ou 12, **caractérisé en ce que** les moyens pour effectuer ledit enregistrement sont présents dans chacun des éléments du réseau.

14. Réseau selon la revendication 13, **caractérisé en ce que** chaque élément du réseau est adapté à effectuer un enregistrement pour chacun des autres éléments du réseau.

15. Réseau selon la revendication 13, **caractérisé en ce que** chaque élément du réseau est adapté à effectuer un enregistrement pour certains seulement des autres éléments du réseau.

16. Réseau selon la revendication 15, **caractérisé en ce que** chaque élément du réseau est adapté à effectuer un enregistrement pour un seul des éléments du réseau adjacent à l'élément.

17. Réseau selon les revendications 11 à 16, **caractérisé en ce qu'**il s'agit d'un réseau optique.

18. Réseau selon la revendication 17, **caractérisé en ce que** chaque ligne de transmission est formée d'une fibre optique pour chaque sens de transmission.

19. Réseau selon les revendications 11 à 18, **caractérisé en ce que** chacun des canaux en parallèle est un canal dans un système de multiplexage à répartition dans le temps.

20. Réseau selon les revendications 11 à 18, **caractérisé en ce que** chaque canal est transmis à une longueur d'onde indépendante dans un système de multiplexage en longueur d'onde.

21. Réseau selon les revendications 11 à 18, **caractérisé en ce que** les canaux en parallèle sont transmis dans une pluralité de câbles en parallèle.

22. Réseau selon les revendications 11 à 21, **caractérisé en ce qu'**il est adapté à effectuer une transmission de données conformément à une hiérarchie numérique synchrone (SDH).

23. Réseau selon la revendication 22, **caractérisé en ce qu'**il est construit sous la forme d'un MS SPRing.

24. Réseau selon les revendications 11 à 23, **caractérisé en ce que** les canaux secondaires (P1, P2, P3, P4) peuvent être utilisés pour la transmission de trafic de données de basse priorité en fonctionnement normal et que ce trafic peut être interrompu pour prendre en compte lesdites connexions auxiliaires en cas de blocage d'une ou plusieurs lignes de transmission dans un ou plusieurs éléments du réseau dans le réseau.

25. Réseau selon les revendications 11 à 23, **caractérisé en ce que** les canaux secondaires (P1, P2, P3, P4) sont réservés pour lesdites connexions auxiliaires.
